# EUROPEAN PATENT APPLICATION

(11) **EP 1 653 266 A1**
(43) Date of publication of application: **03.05.2006**
(21) Application number: 04025827.9
(22) Date of filing: 29.10.2004
(51) Int. Cl.: G02B 13/00, G02B 26/08

(54) **Apparatus and method for correcting a non-linear characteristic of a scanned light beam**

(71) Applicant: Wallenstein, Richard, Prof. Dr., 67271 Neuleiningen (DE)
(72) Inventor: McDonagh, Louis, 67655 Kaiserslautern (DE); Wallenstein, Richard, Prof. Dr., 67271 Neuleiningen (DE)
(74) Representative: von Hellfeld, Axel

(57) **Abstract**

An apparatus and a method for correcting a non-linear, in particular a sinusoidal movement of a light beam scanned by a resonant scanner provide for deflection of the light beam (98a, 98b) such that a linear characteristic of the moved light beam is obtained over at least a portion of the scanning amplitude.

## Description

The present invention is concerned with an apparatus and a method for correcting a non-linear, in particular a sinusoidal characteristic of a light beam scanned by a scanner.

### Background of the invention

Optical scanners provide means to deflect a light beam - typically from a laser source - to a given position or in a continuous movement on a given path. When scanning a line is desired, resonant scanners often constitute the best choice thanks to their high speed, compact size, simplicity and reliability. Such scanners are widely used in a large range of applications, such as imaging, microscopy, laser display, retinal scanning head-up displays, inspection, machine vision and other speed and accuracy demanding tasks. Either used alone to produce a single line of light, or coupled to one or more scanners to create raster or more complex pattern, a resonant scanner typically deflects a beam with a non-linear sinusoidal movement. Therefore the beam has a maximum speed at the scanner's central position (at rest position), while it slows down towards its maximum amplitude to stop and accelerate again in the opposite direction. Thus the beam's angular deflection follows a sinusoidal waveform whereas its angular speed is described by a cosine, i.e. a sinusoidal waveform with a phase-shift of a quarter of the oscillating period compared to the amplitude's waveform. Such oscillating non-linear characteristic is resulting from the fact that the scanner is operated at its mechanical resonant frequency, allowing high-speed movement with a limited driving power. This sinusoidal movement has two major effects on the scan's characteristics, which often need to be suppressed for the application and therefore require correction systems that increase the system's complexity and reduce its efficiency. As the beam slows down towards its extreme positions, the resulting illumination or exposure is more intense at its extremities than in the middle. Therefore when a uniform brightness is required, the beam's intensity has to be reduced accordingly as it moves away from its central position.

Such correction requires to modulate the beam's intensity, directly at the source or for example with an acousto-optic modulator, consequently reducing the system's throughput and wasting some of the beam's power. Another effect resulting from a sinusoidal motion is that when a constant clock is used for creating pixels of equal length in time, for instance in display applications, the resulting displayed pixels will appear longer in the center of the line than towards the edges, this being due to the beam's higher speed in the center than at the edges. As in most applications this non-linearity is unacceptable, a variable clock has to be generated, which produces shorter pixel durations in the center of the scan than towards its edges. Several techniques achieving this goal are described in U.S. patents 6,795,221 and 6,140,979, and also in GSI Lumonics' CRS data sheet (www.gsilumonics.com). Such technique increases the system's complexity and requires fast modulation in the center of the scan, which can be limited by the modulation's response time. As these two effects get very troublesome close to the edges of the scan, many users limit the active range (beam-on time) to less than 70% of the total scan time, in a range where the beam movement is close to linear. However this limit to the system's throughput can be a major obstacle for some applications such as laser display, where the laser power comes at a very high cost.

On the other hand rotating polygon scanners have the advantage of producing a linear unidirectional motion, therefore eliminating the two effects previously cited. Thus a constant clock can be used, providing pixels of equal spatial length and of constant brightness without having to waste optical power. However these systems come at a very high cost and demand very high accuracy manufacturing, consequently restricting their use to a limited number of high-end applications where cost reduction is not crucial.

Therefore there is a need for a simple correction device that could be added to a resonant scanner to compensate for the effects of the non-linear, in particular sinusoidal movement previously described, without added complexity to the driving electronics, nor waste of optical power or reduction of throughput.

Accordingly, the present invention aims at solving the technical problem of providing a simple apparatus for correcting a non-linear movement, in particular a sinusoidal movement of a light beam that is periodically moved by a scanner, in particular a resonant scanner.

That problem is solved by an apparatus that comprises at least one passive optical element deflecting the light beam such that the non-linear characteristic is converted into a linear characteristic of the moved light beam over at least a portion of the scanning amplitude.

Such an apparatus can be added to a resonant scanner to compensate for the effects of the sinusoidal movement previously described, without added complexity to the driving electronics nor waist of optical power or reduction of throughput.

According to the invention, a sinusoidal movement of the scanned light beam is converted into a linear movement. The term "linear" means that the speed of the light beam is the same over at least a portion of the scanning amplitude, preferably over the entire scanning amplitude, except at the turning points of the movement.

Preferably, the at least one passive optical element converts the non-linear, in particular sinusoidal movement of the light beam over substantially the full scanning amplitude into a linear movement. Said at least one optical element can be refracting and/or reflecting the light beam. According to the invention, the passive optical element spreads the deflection of the light beam near the turning points of the oscillating movement. The shape of the optical element is such that said spread near the turning points of the periodical movement results in a linear movement in which the speed is always constant, only changing direction at the turning points (points of reversal).

Alternatively, the present invention allows also for providing a non-constant speed of the movement of the light beam by shaping the optical element accordingly. For example, by spreading the deflection of the light beam near the turning points even more as outlined above, the speed can be larger at the turning points as compared to the center of the oscillating periodical movement. In some applications such specific control of speed may be advantageous.

Another way of describing the present invention is to say that said optical element is shaped aspherically such that it deflects the light beam at a position more remote from a center beam by a larger angle than at a position less remote from the center beam.

For example, said optical element can be a lens presenting one or more aspherical surfaces.

Also, said optical element can be a mirror presenting an aspherical surface.

The invention is also concerned with a resonant scanner system comprising an apparatus for correcting a non-linear movement as described above.

The invention results preferably in a homogeneous distribution of light-pixels if the light beam is interrupted periodically at a constant rate of interruptions.

Furthermore, the invention teaches a method of correcting a non-linear, in particular a sinusoidal characteristic of a light beam that is periodically moved by a scanner, wherein the light beam is deflected such that a linear characteristic of the moved light beam is obtained over at least a portion of the scanning amplitude.

The term "deflection" shall cover both refraction and reflection.

### Brief description of the drawings

The advantages and special features and possible embodiments of the invention are discussed referring to the following figures:
- FIG. **1**: represents the amplitude and speed versus time for a sinusoidal motion along with the amplitude of a linear motion of the same speed as the sinusoidal motion in the central position.
- FIG. **2**: is an illustration of a sinusoidal movement where points have been represented at regular time intervals.
- FIG. **3**: illustrates the local brightness resulting of a sinusoidal scan along half of the movement's amplitude.
- FIG. **4**: depicts the system's throughput (total scanned power over input power) when brightness linearization is operated during the whole duration of the active scan.
- FIG. **5**: shows pixel duration vs. time when a time-varying clock is used to create pixels of equal length in space, therefore compensating for the sinusoidal error. The plot is limited to an active scan of 66% in the time domain.
- FIG. **6**: shows pixel duration vs. time when a time-varying clock is used to create pixels of equal length in space, therefore compensating for the sinusoidal error. The plot is limited to an active scan of 80% in the time domain.
- FIG. **7**: illustrates a correction system which transforms the sinusoidal motion of the beam into a linear angular deflection.
- FIG. **8**: illustrates the effect of such optical linearizer on an array of beams that have been emitted at regular time intervals and deflected following a sinusoidal movement.
- FIG. **9**: illustrates the resulting effect of the sinusoidal correction on a resonant scanner's amplitude.
- FIG. **10**: depicts a possible embodiment of such optical linearizer as a unique aspheric cylindrical lens with adequately shaped surfaces.
- FIG. **11**: depicts another possible embodiment of such optical linearizer containing a focusing aspheric lens as the correcting element.

### Detailed description of the invention

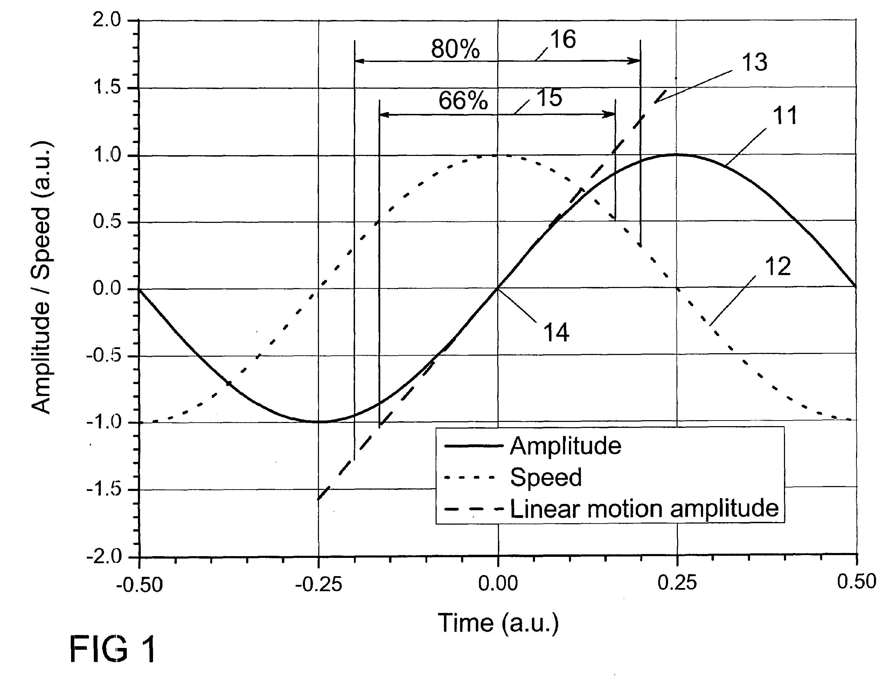

Fig. **1** represents the amplitude (11) and speed (12) versus time for a sinusoidal motion. The oscillating period is normalized to 1 whereas the amplitude and the speed are both normalized to lie within +/- 1. Line (13) represents the amplitude of a linear motion of the same speed as the sinusoidal motion in the central position. Thus one can see how the sinusoidal motion (11) departs from a linear movement (13) as the beam is deflected away from the center position (14). Consequently the proportion of active scan over the total period can be reduced to improve motion linearity or increased to improve the system's efficiency. Active scans of 66% (15) and 80% (16) are represented to illustrate a commonly used active scan value (66%) and a high value (80%) for which the movement's non-linearity is even stronger. During the time between the two lines representing the active scan the scanned beam is on, while it is blanked for the rest of the half-period.

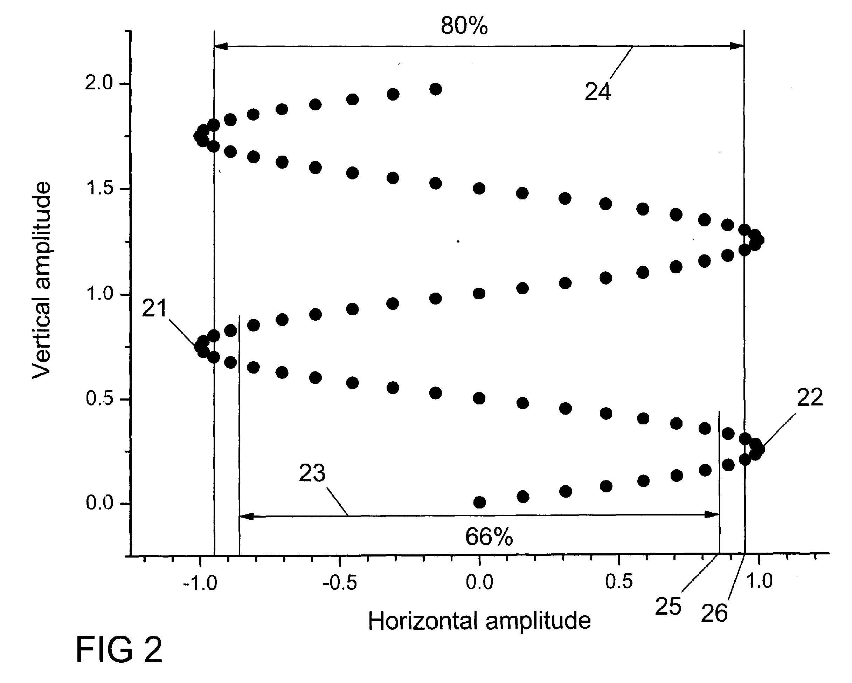

Fig. **2** is another illustration of a sinusoidal movement where points have been represented at regular time intervals. The horizontal axis is modulated with a sine wave whereas the vertical axis is subject to a linear unidirectional sweep. Such two-dimensional raster scanning is typical of laser displays or scanned imaging systems, and provides a good visual representation of the effects of a sinusoidal beam deflection. The fast horizontal scan is usually realized by a resonant scanner while the slow linear vertical scan is produced at the display's refresh-rate by a galvanometric scanner. Thus points are cluttered when approaching extreme positions (21) and (22), leading to high brightness and overlapping lines. Again, active scans of 66% (23) and 80% (24) have been represented, resulting in active scan angle ranges of 86% (25) and 95% (26) of the total scan angle respectively.

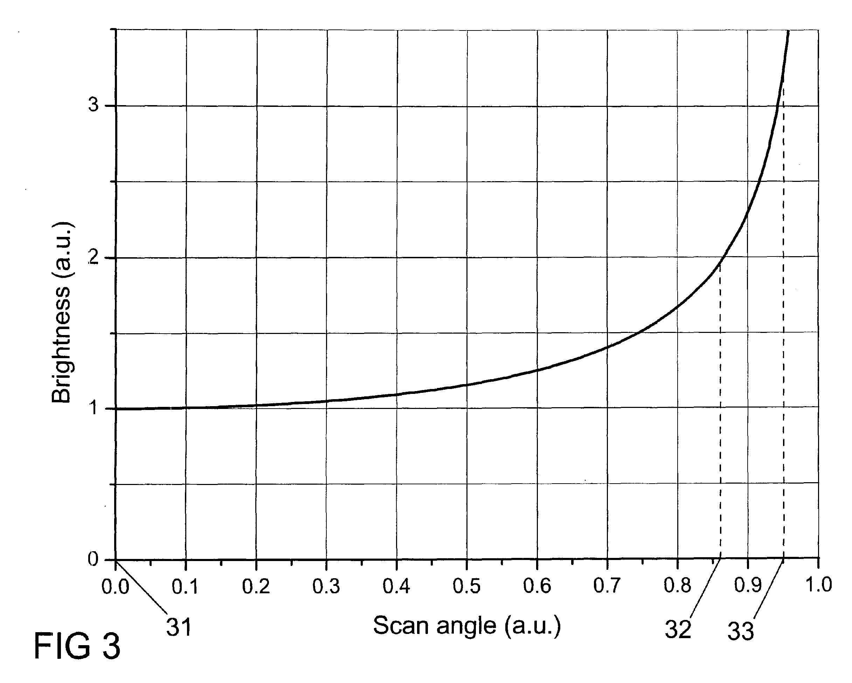

Fig. **3** illustrates the local brightness resulting of a sinusoidal scan along half of the movement's amplitude. The beam having the highest speed when crossing the at rest position (31), the line has the lowest brightness in its center, which is in turn normalized to 1. (32) and (33) locate active scans of respectively 66 and 80% in the time domain, translating into 86 and 95% of the total scan angle in the spatial domain. It is apparent that a 66% active scan will produce a line that is twice as bright at its ends than in its center because the beam travels at half the speed at the end of the line as it does in the center. Conversely an 80% active scan will produce a line that is more than three times as bright at its ends than in its center. Such variations in brightness are unacceptable for many applications, whether an electronic device or the eye is used as a detector. Therefore one can perform a brightness linearization by reducing the beam's intensity as it travels from the center to the extreme positions. The full beam power is then used only around the center of the scan.

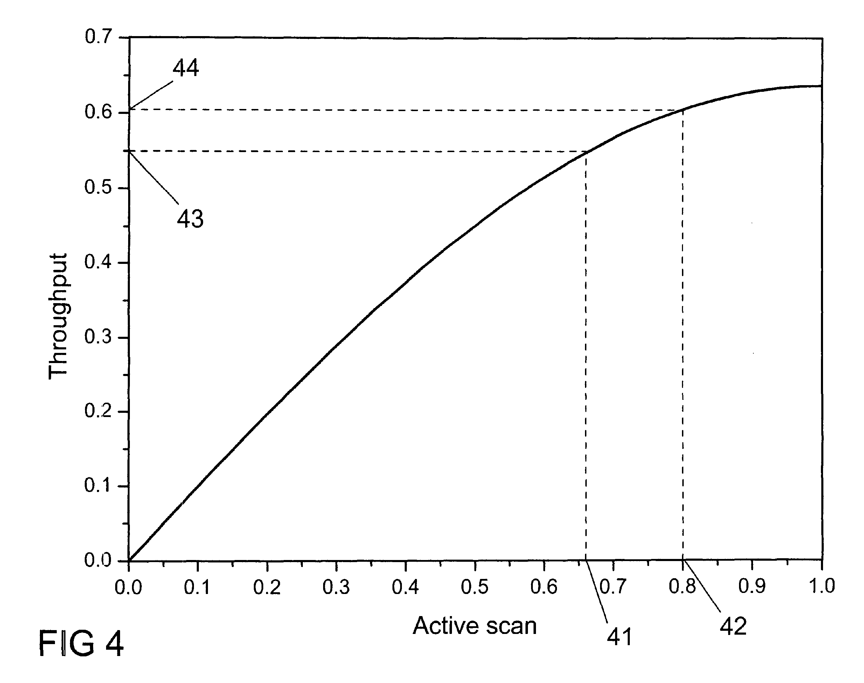

Fig. **4** depicts the system's throughput (total scanned power over input power) when brightness linearization is operated during the whole duration of the active scan. The larger the active scan, the brighter the edges of the line are, and therefore the more power is wasted when operating brightness linearization. This translates in a rollover of the throughput as the active scan time is increased. It is then apparent that a 66% active scan (41) with brightness linearization leads to 55% throughput (43), whereas an 80% active scan (42) leads to 61% throughput (44). Such low throughput can be very prejudicial to applications such as laser display where laser power comes at a very high cost and should be preserved as much as possible in the modulation and projection system.

When spatial modulation of the projected pattern is desired, the beam's intensity is modulated in time accordingly. The modulation signal can therefore be used to create pixels on a one-dimensional or two-dimensional scan, resulting in images or video in the case of a laser projection system. Such signals usually follow a constant clock giving a time base to synchronize the pixel modulation and the scan frequency. However if such constant clock is directly utilized to modulate the beam's intensity along the scanning movement, the resulting pixels will be stretched in the center of the line where the beam has the highest speed and compressed and overlapping when approaching the edges of the scan. Thus the image will be constituted of pixels of unequal length, making it inadequate for imaging and display applications.

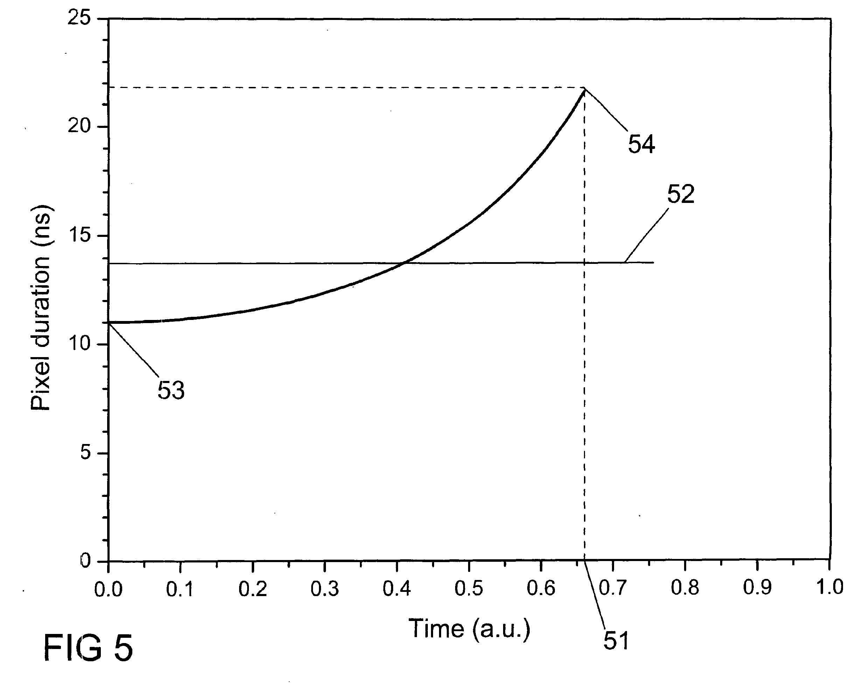

One compensation technique is to use a time-varying clock that creates short pixel durations in the center of the scan and longer durations towards the edges. By keeping the product of pixel duration by beam local speed constant, the resulting pixel spatial length is maintained constant. Fig. 5 shows pixel duration vs. time normalized to 1 for a quarter of the oscillating movement or the time between the center position and one extreme position. The plot is limited to an active scan of 66% in the time domain (51). The calculations have been made for a 24kHz resonant scanner (48kHz line frequency) for which 1000 pixels are modulated during the active scan. Therefore the active line time is here 13,75 µs, leading to an average pixel duration of 13,75 ns (52) or a pixel clock of 72,7 MHz. The corrected pixel duration increases from 11,0 ns (53) to 21,6 ns (54) as the beam moves away from the center position to the end of the active scan. This pixel duration variation can also be expressed as a pixel clock variation from 90,9 MHz in the center position to 46,3 MHz at the end of the active scan time.

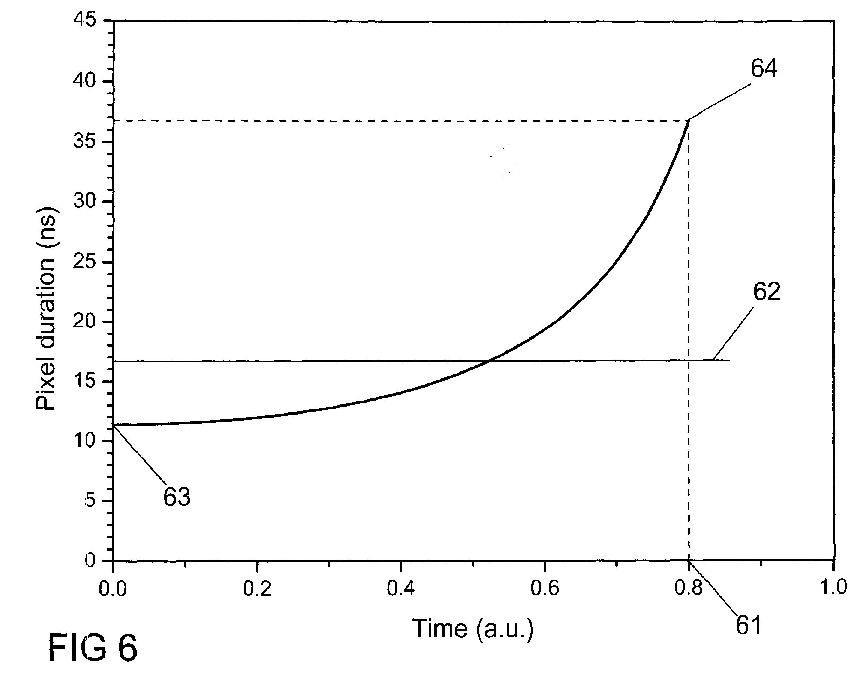

Fig. **6** presents the same calculation for an active scan of 80% (61). The active line time is here 16,7 µs, leading to an average pixel duration of 16,7 ns (62) or a pixel clock of 59,9 MHz. The corrected pixel duration increases from 11,4 ns (63) to 36,8 ns (64) as the beam moves away from the center position to the end of the active scan. This pixel duration variation can also be expressed as a pixel clock variation from 87,7 MHz in the center position to 27,2 MHz at the end of the active scan time. Such high modulation frequencies and large frequency variations implies a challenge on the driving electronics with respect to range and precision.

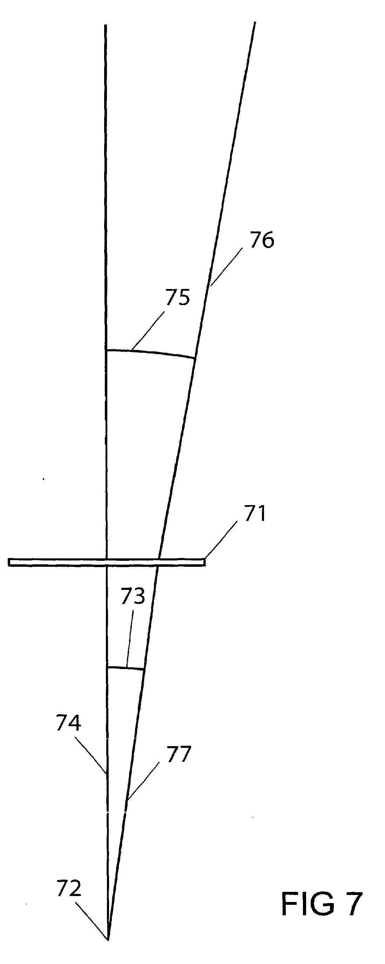

It would therefore be of great advantage to have a correction system which would transform the sinusoidal motion of the beam into a linear angular deflection. Such optical linearizer (71) is presented in Fig. **7**. The deflected beam (77) originates from the scanner location (72) making an angle αᵢₙ (73) with the center beam (74). The beam enters the optical linearizer (71) and comes out as a beam (76) making a different angle αₒᵤₜ (75) with respect to the center beam (74) which has remained undeflected. As αᵢₙ results of a sinusoidal movement, it may be expressed as αᵢₙ = αₘₐₓ sin(2π̃f.t) where αₘₐₓ is the movement's angular amplitude, f is the oscillating frequency of the scanner and t is time. Then having αₒᵤₜ as a linear function of time for each half period implies that αₒᵤₜ = A.arcsin(αᵢₙ/αₘₐₓ), where A is a constant that is defined for a given optical linearizer. The output angle αₒᵤₜ is therefore a linear function of time for each half period of the scanner's oscillation and can be expressed as αₒᵤₜ = B.t around the central position, B being a positive or negative constant for a given optical linearizer.

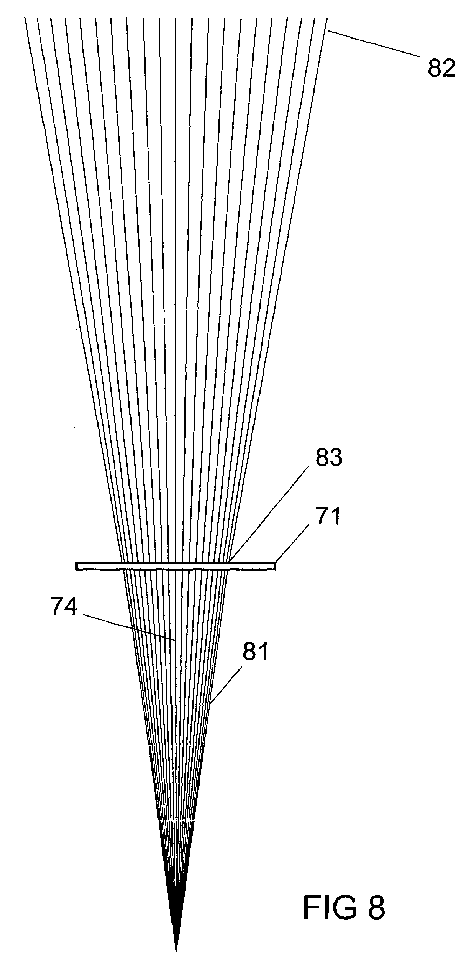

Fig. **8** illustrates the effect of such optical linearizer (71) on an array of beams (81) that have been emitted at regular time intervals and deflected following a sinusoidal movement. As has been previously described, the beams are cluttered close to the extreme positions and spread apart closer to the center (74). Beams have been represented for an 80% active scan time to illustrate a situation in which sinusoidal error correction is most beneficial. It should be noted that output beams (82) don't look equally spaced in Fig. 8 although the angular spacing between each of these output beams is constant. This is due to a residual astigmatism resulting from the fact that extreme output beams (83) are emerging from the optical linearizer (71) closer to the central axis (74) than if they all originated from one point. However this astigmatism will be negligible at greater distances from the source when the angular displacement of the beams dominates.

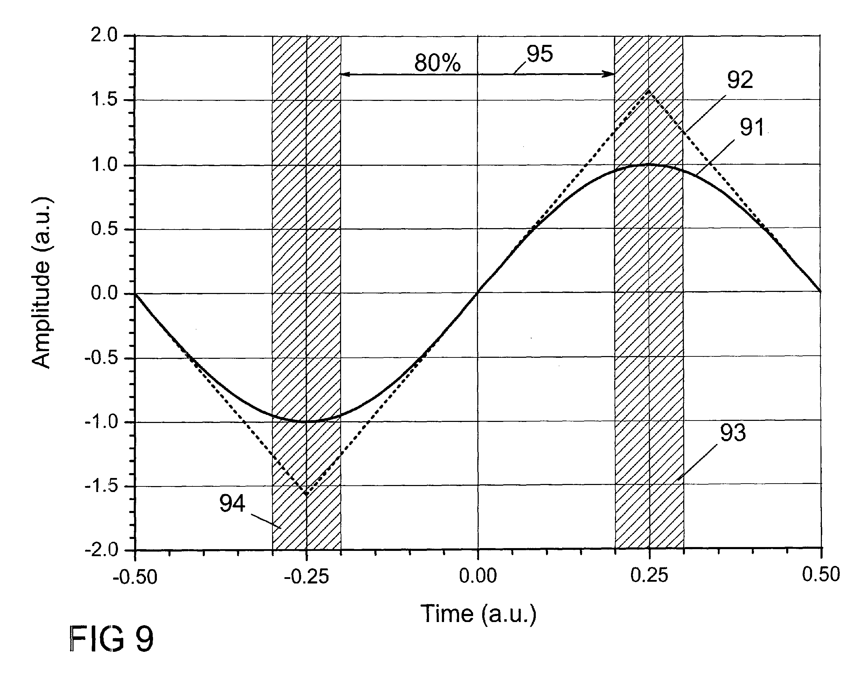

The resulting effect of the sinusoidal correction is illustrated in Fig. **9**. The sinusoidal curve (91) represents the variation of the deflection angle αᵢₙ after the resonant scanner versus time, whereas the triangular function (92) represents the corrected deflection angle αₒᵤₜ after the optical linearizer. The grey areas (93) and (94) materialize the periods of time when the beam is off (outside the active scan period) and therefore doesn't require αₒᵤₜ to follow a linear motion. An active scan of 80% (95) has been chosen here to illustrate the correction effect. As in Fig. **1**, the oscillating period is normalized to 1 whereas the amplitude is normalized to lie within +/- 1.

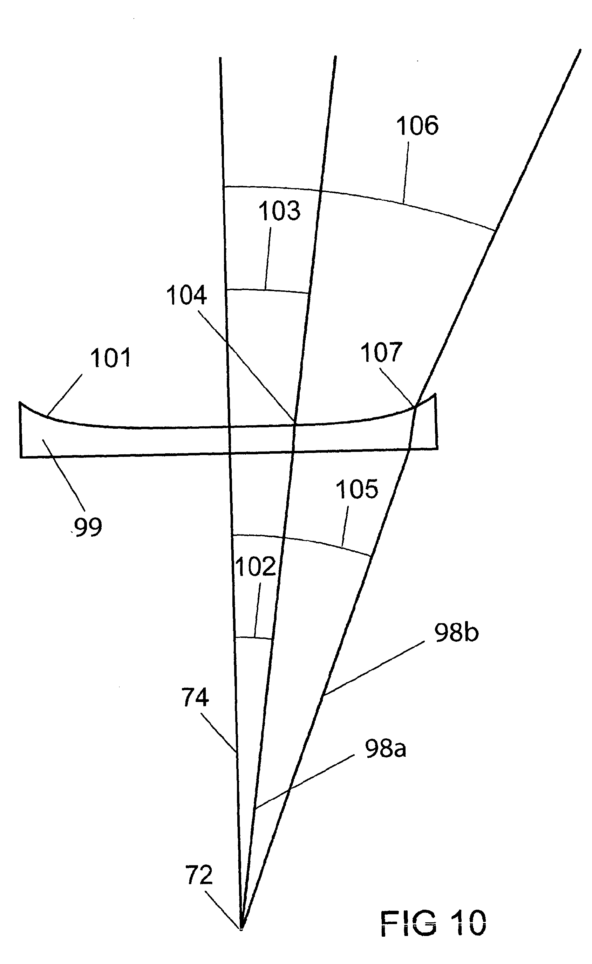

Such optical linearizer can be embodied as a unique aspheric cylindrical lens as represented in Fig. **10**. This particular embodiment consists of a plano-concave cylindrical lens with an aspheric surface (101) that has an increasing curvature further away from its axis. Incident beams that make a small angle (102) with the central beam (74) obey to an almost linear motion and therefore need very little additional deflection for sinusoidal error correction. The output beam (98a) should in turn make an angle (103) which is close to the input angle (102). This will be obtained by making the curvature of the aspheric surface (101) very small at positions close to the optical axis (104). As the incident beam is deflected further away from the center position, as beam (98b), making an increasingly large angle (105) with the optical axis, it requires an increased additional deflection from the optical linearizer to compensate for the sinusoidal error. Therefore the output angle (106) should be increased accordingly to maintain a linear angular motion after the optical linearizer. It is then apparent that the aspherical surface's curvature increases even further at locations away from its axis (107). Following this principle, the aspheric surface's shape is chosen to fulfill the correction condition αₒᵤₜ = A.arcsin(αᵢₙ/(αₘₐₓ). As the beam will be used for a certain active scan time only (AS), this correction condition needn't be fulfilled for all angles αᵢₙ such that Abs(αᵢₙ)< αₘₐₓ but rather for Abs(αᵢₙ) < αₘₐₓ.sin(π̃.AS/2), where AS is a value between 0 and 1. The shape of such aspherical surface may be defined by first calculating its local slope and then integrating it to get the final profile. For each beam making an input angle αᵢₙ with the optical axis, one can calculate the precise position of its exit point on the aspheric surface (101) where the surface's slope must be chosen such that the condition αₒᵤₜ = A.arcsin(αᵢₙ/αₘₐₓ) is verified. These calculations only require applying geometrical equations and the laws of refraction. Doing so for all input angles within the active scan range, one obtains an expression for the slope of surface (101) across its width. Integrating this expression of the local slope by symbolic or numerical methods thus gives the desired height profile for the aspheric surface. It can then be fitted by a polynomial expression generally used for defining and manufacturing aspherical surfaces.

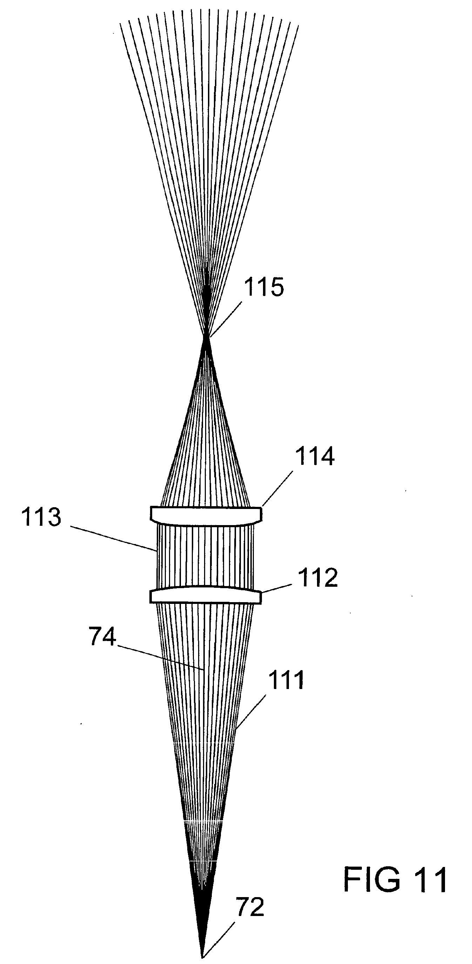

Many embodiments are possible that realize the same correction function. Depending on the application it might be preferable to correct a divergent array of beam as in Fig. **8** and **9**, a focused array of beams, or even a collimated array. Such practical situation is represented in Fig. **11.** A beam is scanned with a sinusoidal motion, creating an array of beams (111) emitted at regular time intervals and originating from the scanner location (72). This array of beams is then collimated by an optical system (112) which may be for instance a simple plano-convexe cylindrical lens, an achromat or an aspheric lens to compensate for spherical aberration. The beams are now parallel but unequally spaced following a sinusoidal distribution (113). Then this array of beams if focused by the optical linearizer (114), represented here by a plano-convexe aspheric cylindrical lens of which the aspheric surface's curvature increases towards the edges of the lens. In other words the lens' dioptric power is higher for beams away from the optical axis, resulting in a tighter focusing than with regular spherical optics. The aspherical shape is chosen to create a linear distribution of the output beams as previously described for the divergent array of beams. This setup might be beneficial in a two-axis scanning unit, where the resonant scanner is placed in (72) and the second scanner deflecting the beam in the second axis is placed at the final focus (115). As for the piano-concave aspherical lens represented in Fig. 10, the aspherical surface of lens (114) can be defined by first calculating its required local slope and then integrating it to obtain the final surface profile. Other embodiments may add other functions to the linearization, such as an achromatic behaviour when it is desired to scan white light or a plurality of wavelengths, magnification or demagnification of the scan angle in one or both axes. Both refractive and reflective optics may be used alone or in combination to realize the desired correction.

## Claims

1. Apparatus for correcting a non-linear, in particular sinusoidal characteristic of a light beam moved by a scanner, **characterized in that** the apparatus comprises at least one passive optical element (99; 114) deflecting the light beam such that the non-linear characteristic is converted into a linear characteristic of the moved light beam over at least a portion of the scanning amplitude.

2. Apparatus according to claim 1, **characterized in that** the linear characteristic is obtained over substantially the full scanning amplitude.

3. Apparatus according to one of the claims 1 or 2, **characterized in that** said optical element (99; 114) is refracting said light beam (89a, 89b).

4. Apparatus according to one of the claims 1 or 2, **characterized in that** said optical element is reflecting said light beam.

5. Apparatus according to one of the preceding claims, **characterized in that** said optical element (99; 114) is shaped aspherically such that it deflects the light beam at a position more remote from a center beam (74) by a larger angle than at a position less remote from the center beam (74).

6. Apparatus according to one of the preceding claims, **characterized in that** said optical element is a lens (99) presenting one or more aspherical surfaces (101).

7. Apparatus according to one of the claims 1 to 5, **characterized in that** said optical element is a mirror presenting an aspheric surface.

8. A resonant scanner system comprising an apparatus according to one of the claims 1 to 7.

9. A method of correcting a non-linear, in particular a sinusoidal characteristic of a light beam that is periodically moved by a scanner, **characterized in that** the light beam is deflected such that a linear characteristic of the moved light beam is obtained over at least a portion of the scanning amplitude.
